# EUROPÄISCHE PATENTANMELDUNG

(11) **EP 2 492 447 A1**
(43) Veröffentlichungstag der Anmeldung: **29.08.2012**
(21) Anmeldenummer: 11155472.1
(22) Anmeldetag: 22.02.2011
(51) Int. Cl.: F01D 11/00, F01D 5/08, F01D 11/02

(54) **Kühlung von Turbinenschaufeln**

(71) Anmelder: Technische Universität Darmstadt, 64283 Darmstadt (DE)
(72) Erfinder: Scherhag, Christian, 55129 Mainz (DE)
(74) Vertreter: Stumpf, Peter

(57) **Zusammenfassung**

Die vorliegende Erfindung betrifft eine Vorrichtung zur Erzeugung von sich zeitlich verändernden Prallstrahlen zur Kühlung von Turbinenrotorschaufeln und Turbinenstatorschaufeln. Durch konstruktive Gestaltung wird gewährleistet, dass in zeitlichen Abständen Kühlluftgeschwindigkeitspakete oder Kühlluftimpulse zur Kühlung in die Schaufeln eintreten.

## Beschreibung

### Kühlung von Turbinenschaufeln

Die vorliegende Erfindung betrifft eine Vorrichtung zur Erzeugung von sich zeitlich verändernden Prallstrahlen zur Kühlung von Turbinenrotorschaufeln und Turbinenstatorschaufeln. Durch konstruktive Gestaltung wird gewährleistet, dass in zeitlichen Abständen Kühlluftgeschwindigkeitspakete oder Kühlluftimpulse zur Kühlung in die Stator- oder Rotorschaufeln eintreten.

### Beschreibung

### Stand der Technik

Laufschaufeln, Leitschaufeln, Hitzeschilde oder andere dem Heißgasstrom einer Gasturbine ausgesetzten Bauteile müssen intensiv gekühlt werden, um den in der Maschine auftretenden thermischen und mechanischen Belastungen während des Betriebs gewachsen zu sein.

Die Rotor- und Statorschaufeln von Hochdruckturbinen in modernen Fluggasturbinen werden durch ein System von innerhalb der Schaufeln verlaufenden Kühlluftkanälen gekühlt. Den Kühlkanälen wird Kühlluft zugeführt, die vom Verdichter (Kompressor) zur Verfügung gestellt wird. Die Kühlluft trifft innerhalb der Schaufel unter anderem als Prallstrahl (Prallkühlung) auf die innenliegende Schaufeloberfläche. Gegenüber stationären Prallstrahlen können gepulste Prallstrahlen abhängig von Amplitude und Strouhalzahl die Kühleffektivität deutlich erhöhen.

### Aufgabe

Es ist Aufgabe der Erfindung in zeitlichen Abständen Kühlluftgeschwindigkeitspakete oder Kühlluftimpulse zur Kühlung von Turbinenrotorschaufeln oder Turbinenstatorschaufeln zu erzeugen.

### Lösung der Aufgabe

Erfindungsgemäß wird die Aufgabe mit einer Vorrichtung gemäß den Merkmalen des Patentanspruchs 1 gelöst. Aus den Unteransprüchen ergeben sich weitere Merkmale und vorteilhafte Ausführungsformen der Erfindung.

Die Erfindung besteht aus einem konstruktiven Konzept, das es ermöglicht, in zeitlichem Abstand Kühlluftgeschwindigkeitspakete oder Kühlluftimpulse zur Schaufelkühlung zu erzeugen. Anstelle eines stetigen Prallluftstroms wird ein sich im zeitlichen Verlauf verändernder Luftstrom erzeugt.

Bei der Erfindung handelt es sich um eine Vorrichtung, die so ausgeführt ist, dass es durch die Rotation der Turbinenrotorschaufeln zu einer zeitlich fluktuierenden Unterbrechung bzw. deutlichen Reduzierung des Prallluftstroms kommt. Die Vorrichtung enthält mindestens eine Öffnung durch die der Luftstrom je nach Stellung der Turbinenrotorschaufel in diese einströmt. Durch die Wahl von Form, Größe und Abständen der Öffnung(en) in der Vorrichtung und Position der Öffnung(en) gegenüber der Öffnung(en) in den Rotor- bzw. Statorschaufeln werden die zeitlichen Abstände und die Amplituden der Kühlluftgeschwindigkeitspakete oder Kühlluftimpulse verändert und durch geeignete Wahl optimiert.

Zur Kühlung von Rotorschaufeln ist die Vorrichtung an einem nicht rotierenden Teil im Radseitenraum angebracht. Auf der Innenseite der Vorrichtung befindet sich Kühlluft. Auf der Außenseite der Vorrichtung rotiert der Rotor. Immer wenn sich die mit der Rotorschaufel rotierende Eingangsöffnung in den Kühlluftkanal der Rotorschaufel über einer Öffnung der Vorrichtung befindet, strömt für einen kurzen Moment ein deutlich höherer Kühlluftmassenstrom in den Kühlluftkanaleingang dieser Schaufel. Auf diese Weise lösen sich an der Austrittsöffnung für die Prallstrahlen Ringwirbelstrukturen ab, die in Abhängigkeit von Amplitude und Strouhalzahl zu einer Erhöhung des Wärmeübergangs auf der vom Prallstrahl beaufschlagten Oberfläche im Innern der Rotorschaufel führen.

Zur Kühlung von Statorschaufeln ist die Vorrichtung an einem mit dem Rotor rotierenden Teil im Radseitenraum angebracht. Auf der Innenseite der Vorrichtung befindet sich Kühlluft. Auf der Außenseite der Vorrichtung befindet sich die Eingangsöffnung in den Kühlluftkanal der Statorschaufel. Immer wenn sich die mit dem Rotor rotierenden Öffnungen der Vorrichtung über der Eingangsöffnung in den Kühlluftkanal einer Statorschaufel befinden, strömt für einen kurzen Moment ein deutlich höherer Kühlluftmassenstrom in den Kühlluftkanaleingang dieser Schaufel. Auf diese Weise lösen sich an der Austrittsöffnung für die Prallstrahlen Ringwirbelstrukturen ab, die in Abhängigkeit von Amplitude und Strouhalzahl zu einer Erhöhung des Wärmeübergangs auf der vom Prallstrahl beaufschlagten Oberfläche im Innern der Statorschaufel führen.

Aufgrund der hohen Effizienz der unstetigen Prallluftkühlung erhöht sich bei gleicher Kühlluftmenge die Lebensdauer der betreffenden Turbinenkomponente und der Kühlbedarf wird verringert. Die Reduzierung des Kühlluftmassenstroms führt zu einem höheren Gesamtwirkungsgrad. In der bevorzugten Ausführungsform werden die Kühlluftgeschwindigkeitspakete oder Kühlluftimpulse passiv generiert. Diese Vorrichtung zur Erzeugung der unstetigen oder pulsierenden Prallluftströme kann in vorhandene Turbinen eingebaut werden.

In der bevorzugten Ausführungsform zur Rotorschaufelkühlung ist die Vorrichtung an einem nicht rotierenden Teil im Radseitenraum befestigt. Bei der bevorzugten Ausführungsform zur Statorschaufelkühlung ist die Vorrichtung an einem mit dem Laufrad rotierenden Teil im Radseitenraum befestigt.

In unterschiedlichen Ausführungen ist die Vorrichtung als Ring oder Ringabschnitt ausgeführt, der sich über einen Teil des Umfangs oder den gesamten Umfang erstreckt. In einem Ausführungsbeispiel besteht dieser Ring oder Ringabschnitt aus einem dünnen Ringblech.

In einem Ausführungsbeispiel sind die Öffnungen in der Vorrichtung als Bohrungen ausgeführt. In einem anderen Ausführungsbeispiel sind die Öffnungen als Langlöcher oder Langnuten oder Kombinationen aus verschiedenen Öffnungsformen ausgeführt. Im bevorzugten Ausführungsbeispiel sind die Abstände zwischen den Öffnungen in diskreten Abständen angeordnet und die Öffnungen sind so ausgeführt, dass sich die Eingangsöffnung des Kühlluftkanals einer jeden Schaufel an derselben axialen Position wie die Öffnung in der Vorrichtung befindet.

In einem Ausführungsbeispiel ist mindestens eine Eingangsöffnung des Kühlkanals gegenüber der Vorrichtung abgedichtet (z.B. durch eine Labyrinthdichtung).

### Beschriftung der Zeichnungen

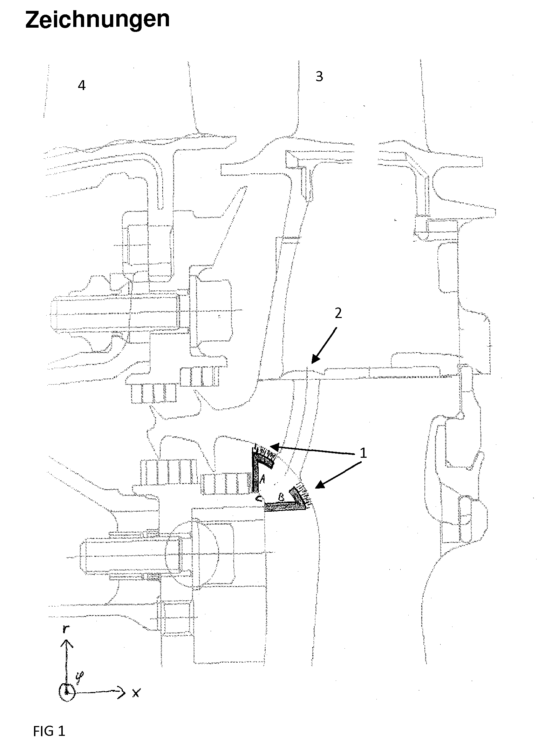

FIG 1: Ausschnitt eines Triebwerkes mit Ausführungsbeispiel der Vorrichtung zur Rotorschaufelkühlung
   A, B, C Vorrichtung (Ring)

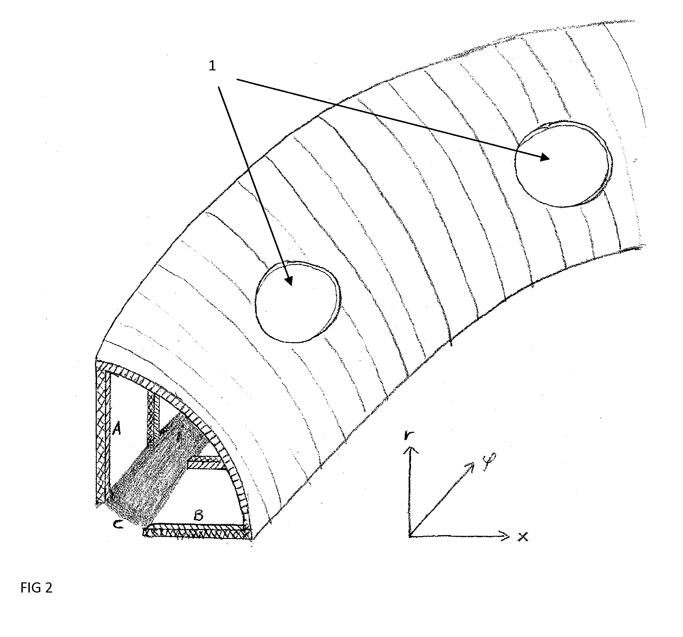

   1 Dichtung
   2 Kühlluftstrom
   3 Rotorschaufel
   4 Statorschaufel
FIG 2: Ausschnitt einer Vorrichtung ausgeführt als Ring mit Öffnungen 1 Öffnungen bzw. Löcher im Ring

## Patentansprüche

1. Vorrichtung zur Kühlung von Turbinenschaufeln durch Prallstrahlen, **dadurch gekennzeichnet, dass** sich durch die Vorrichtung der Kühlluftmassenstrom im zeitlichen Verlauf ändert.

2. Vorrichtung nach Anspruch 1 **dadurch gekennzeichnet, dass** die Vorrichtung Öffnungen enthält, so dass sich der Kühlluftmassenstrom deutlich erhöht, wenn eine solche Öffnung mit der Öffnung eines Kühlkanals einer Schaufel überlappt.

3. Vorrichtung nach einem der Ansprüche 1 bis 2 **dadurch gekennzeichnet, dass** die Vorrichtung aus einem Ring besteht.

4. Vorrichtung nach einem der Ansprüche 1 bis 3 **dadurch gekennzeichnet, dass** der Ring aus einem dünnen Ringblech besteht.

5. Vorrichtung nach einem der Ansprüche 1 bis 4 **dadurch gekennzeichnet, dass** die Vorrichtung zur Rotorschaufelkühlung an einem nicht rotierenden Teil im Radseitenraum (gehäusefest) montiert ist.

6. Vorrichtung nach einem der Ansprüche 1 bis 4 **dadurch gekennzeichnet, dass** die Vorrichtung zur Statorschaufelkühlung an einem mit dem Rotor rotierenden Teil im Radseitenraum (rotorfest) montiert ist.

7. Vorrichtung nach einem der Ansprüche 1 bis 6 **dadurch gekennzeichnet, dass** sich der Ring um den gesamten Umfang erstreckt.

8. Vorrichtung nach einem der Ansprüche 1 bis 7 **dadurch gekennzeichnet, dass** die Öffnungen in diskreten Abständen angeordnet sind.

9. Vorrichtung nach einem der Ansprüche 1 bis 8 **dadurch gekennzeichnet, dass** sich die Eingangsöffnung des Kühlluftkanals einer jeden Schaufel an derselben axialen Position wie die Öffnungen im Ring befinden.

10. Vorrichtung nach einem der Ansprüche 1 bis 9 **dadurch gekennzeichnet, dass** die Öffnungen Bohrungen, Langlöcher oder Langnuten sind.

11. Vorrichtung nach einem der Ansprüche 1 bis 10 **dadurch gekennzeichnet, dass** die Eingangsöffnung des Kühlkanals gegenüber dem Ring mit einer Dichtung abgedichtet ist.

12. Vorrichtung nach einem der Ansprüche 1 bis 11 **dadurch gekennzeichnet, dass** die zu kühlenden Turbinenschaufeln im Rotor und / oder im Stator angeordnet sind.
